## Europäisches Patentamt
## European Patent Office
## Office européen des brevets

(19)

(11) Numéro de publication: **0 029 399**
**A2**

(12)

# DEMANDE DE BREVET EUROPEEN

(21) Numéro de dépôt: **80420123.4**

(22) Date de dépôt: **13.11.80**

(51) Int. Cl.³: **G 21 C 7/10**, G 21 C 7/00

(30) Priorité: **19.11.79  FR 7929004**

(71) Demandeur: **URANIUM PECHINEY UGINE KUHLMANN, 23 rue Balzac B.P. 787 08, F-75360 Paris Cedex 08 (FR)**

(43) Date de publication de la demande: **27.05.81 Bulletin 81/21**

(72) Inventeur: **Blum, Jacques, 5, rue Voltaire, F-92300 Levallois (FR)**

(74) Mandataire: **Givord, Jean-Pierre et al, PECHINEY UGINE KUHLMANN 28, rue de Bonnel, F-69433 Lyon Cedex 3 (FR)**

(84) Etats contractants désignés: **BE DE GB IT SE**

(54) **Barre de réglage pour réacteur nucléaire.**

(57) L'invention concerne les barres de réglage utilisées dans les réacteurs nucléaires refroidis par de l'eau.

Ces barres comportent un tube en verre au bore contenu dans une gaine en alliage de zirconium. Elles mesurent 4 à 5 m pour des raisons de fabrication, le tube en verre au bore comporte deux tronçons bout à bout.

La jonction entre les deux tronçons se trouve au cœur du réacteur, ce qui cause un pic de flux neutronique qui peut entraîner des surchauffes inacceptables au niveau des éléments combustibles.

Pour éviter cela, les barres de réglage suivant l'invention comportent un tube en verre au bore, ou en autre matière absorbant les neutrons thermiques, en plusieurs tronçons bout à bout, ce qui reporte les jonctions en dehors de la zone critique et évite des pics de flux neutronique inacceptables.

BARRE DE REGLAGE POUR REACTEUR
NUCLEAIRE

L'invention concerne les barres de réglage, appelées aussi barres poison, utilisées dans des réacteurs refroidis à l'eau, pour absorber l'excès de réactivité de la charge de combustible. Ces barres sont disposées à poste fixe dans des points déterminés du coeur d'un réacteur et traversant la zone centrale de celui-ci où la densité du flux neutronique est maximale. Cette absorption est réalisée au moyen d'une matière à forte section de capture des neutrons thermiques contenue dans ces barres.

L'un des types les plus courants de barres de réglage est constitué d'un tube de gainage en un alliage à base de zirconium à l'intérieur duquel est logée une âme pleine ou creuse en une matière à forte section de capture des neutrons thermiques. La longueur de ces barres est couramment de l'ordre de 4 à 5 m dans le cas des réacteurs de forte puissance. C'est ainsi que, pour réaliser de telles âmes, on a fait appel à des tubes en verre au bore. Comme il est très difficile de réaliser des tubes de verre d'une telle longueur en une seule pièce, on a utilisé deux tronçons de tube sensiblement égaux disposés bout à bout. Les barres de réglage ainsi obtenues présentent de sérieux inconvénients. On a, en effet, constaté que, dans certains cas, après mise en place des deux tronçons de tube de verre au bore à l'intérieur du tube de gainage, il subsiste dans la zone de jonction de ces deux tronçons, un étroit intervalle. On observe, alors, après mise en place de la barre de réglage dans le coeur du réacteur en cours de fonctionnement, un pic de flux neutronique au niveau de cette jonction. Or, celle-ci est située précisément dans une zone du coeur où, normalement, le flux neutronique atteint déjà sa densité maximale. Il y a donc là un risque de surchauffe locale des éléments combustibles qui peut provoquer des incidents d'une certaine gravité. Le même risque serait encouru en utilisant au lieu de tubes en verre au bore des tiges ou des profilés en verre au bore ou en autres matières absorbant les neutrons thermiques comportant une jonction dans la zone de flux neutronique maximale.

Les nouvelles barres de réglage, qui font l'objet de l'invention, évitent les discontinuités dans l'absorption du flux neutronique, dans toute la zone où ce flux atteint sa valeur maximale, sans faire appel pour autant à des tronçons de tiges, de profilés ou de tubes en verre au bore, ou en autres matières absorbant les neutrons thermiques, de longueur notablement supérieure.

Ces barres comportent une âme en verre au bore, ou en autres matières absorbant les neutrons thermiques, sous forme d'un tube, d'une tige ou d'un profilé, réalisée en plusieurs tronçons bout à bout, qui ne présente pas de discontinuités dans toute la zone du coeur du réacteur où le flux neutronique atteint sa valeur maximale ou une valeur proche de celle-ci.

L'exemple non limitatif et les figures ci-après permettent de mieux comprendre les caractéristiques d'un mode de réalisation des barres suivant l'invention.

La figure 1 est une vue schématique, en coupe longitudinale, d'une barre de réglage suivant l'invention.

La figure 2 est une vue, en coupe transversale, suivant A de la figure 1.

La figure 3 représente de façon schématique la variation du flux neutronique le long d'une barre de réglage comportant un tube de verre au bore en deux tronçons.

La figure 4 représente, de la même façon, la variation de flux neutronique le long d'une barre de réglage suivant l'invention.

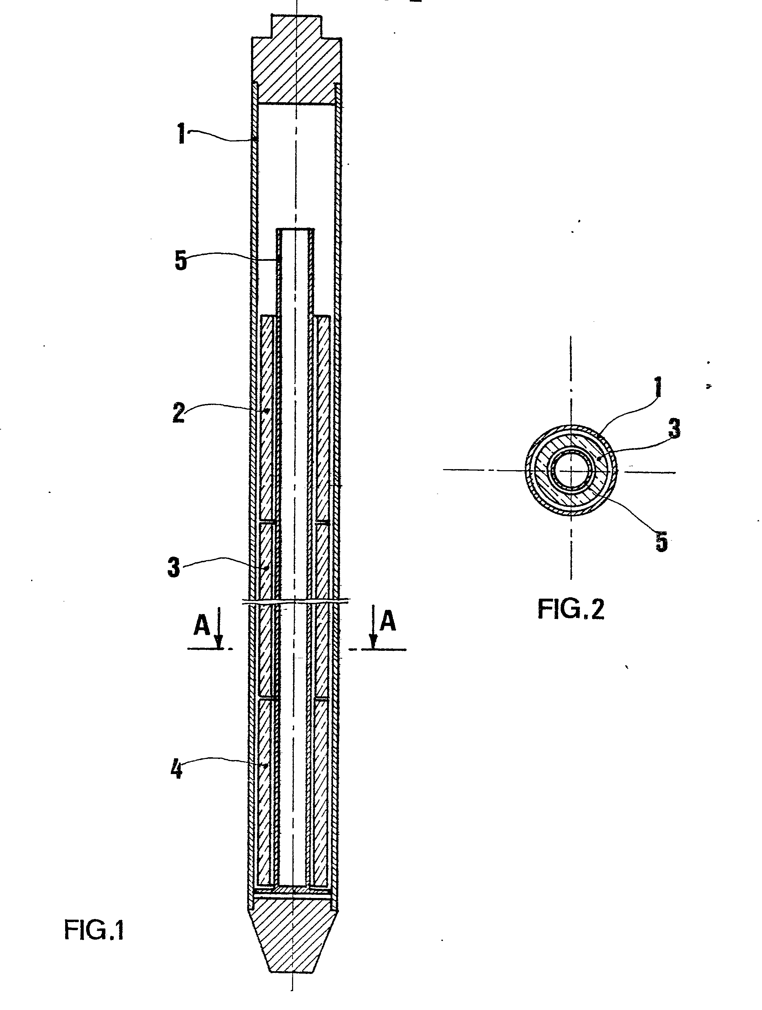

On voit, figure 1, une barre de réglage suivant l'invention qui comporte un tube de gainage (1) en zircaloy 4, (alliage à base de zirconium contenant 1,5 % d'étain et de petites quantités de Fe et Cr), d'une longueur d'environ 4,4 m, à l'intérieur duquel est logé un tube de verre au bore en trois tronçons (2), (3) et (4) disposés bout à bout.
La longueur totale de ce tube est de 3,5 m.

Dans le mode de réalisation qui est ici décrit, une entretoise tubulaire (5) en alliage de zirconium est disposée à l'intérieur du tube de verre au bore. On voit sur la coupe, figure 2, la disposition concentrique de l'entretoise (5) du tronçon (3) du tube de verre au bore et, enfin, du tube de gainage (1). Dans le cas de la barre de réglage représentée, le tube de gainage a un diamètre de 9,7/8,7 mm, le tube de verre au bore un diamètre de 8,5/4,8 mm, et l'entretoise un diamètre de 4,7/4,4 mm. Le tronçon (3) du tube de verre au bore placé dans la zone médiane de la barre de réglage, qui est montré en coupe sur la figure 1, est, en fait, d'une longueur sensiblement égale à la moitié, soit 2,25 m de la longueur totale de 4,5 m des trois tronçons de ce tube mis bout à bout. La longueur de chacun des tronçons (2) et (4) est égale environ au quart de la longueur totale. De cette façon, le tronçon (3) s'étend le long de toute la zone à haut flux du coeur du réacteur et les jonctions entre les extrémités de ce tronçon et celles des tronçons adjacents (2) et (4) se trouvent dans des zones où le flux neutronique est moins intense.

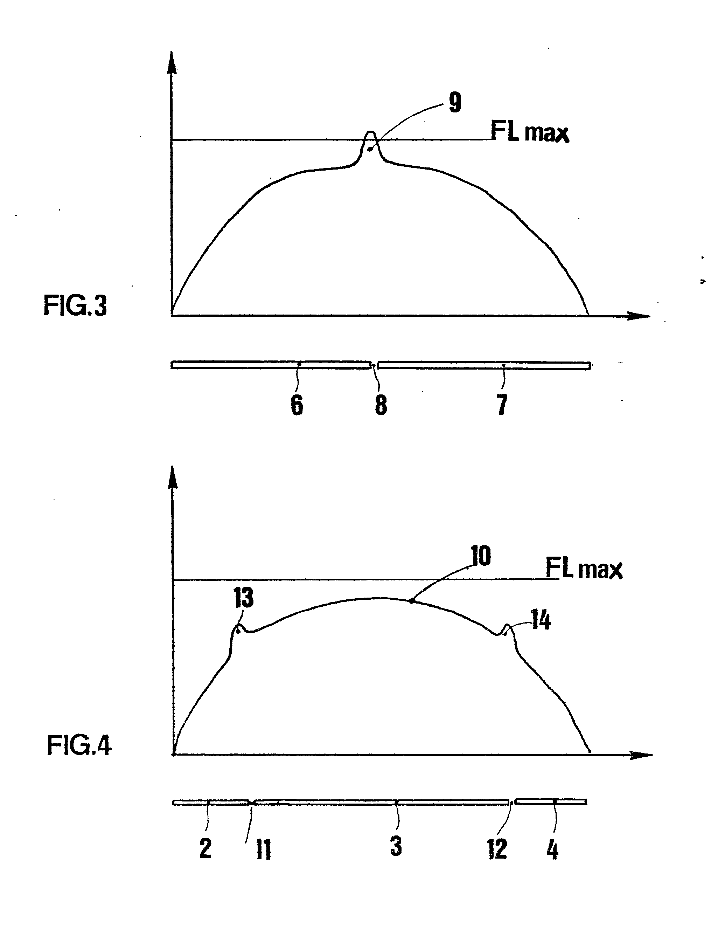

On voit figure 3 ce qui peut se produire lorsque le tube en verre au bore comporte deux tronçons égaux avec une jonction dans la zone de flux maximal. Sur le diagramme, on a porté en abscisse la longueur de la barre de réglage et, en ordonnée, le flux neutronique. La barre est représentée de façon schématique au-dessous de l'axe des abscisses. La courbe représente la variation du flux neutronique le long de cette barre. On voit que, si, au niveau de la jonction entre les deux tronçons (6) et (7) de la barre, il existe un intervalle (8), la courbe présente un pic (9) de flux neutronique. Si ce flux dépasse la valeur nominale acceptable, FL max, des incidents de fonctionnement peuvent se produire au niveau des éléments combustibles surchauffés.

Au contraire, dans le cas du tube en verre au bore en trois tronçons représenté figure 1, les incidents sont pratiquement impossibles, comme le montre la figure 4. On voit que, dans ce cas, la partie médiane de la barre de réglage constituée du tronçon (3) occupe toute la zone de flux neutronique intense telle qu'elle est représentée par la courbe (10). Si de petits intervalles (11) et (12) existent au niveau des jonctions entre le tronçon (3) et les tronçons d'extrémité (2) et (4) du tube en verre au bore, les pics de flux neutronique correspondants (13) et (14) ont toutes chances de ne pas atteindre le maximum de la courbe (10) et, par conséquent, de rester bien en-deçà de la valeur maximale acceptable.

La nouvelle barre de réglage ainsi mise au point représente donc un progrès très important par rapport aux barres de réglage proposées antérieurement. On voit que la particularité essentielle de cette nouvelle barre de réglage est que l'âme en verre au bore qu'elle contient, qui est dans le cas de l'exemple un tube, ne présente pas de discontinuité dans toute la zone du coeur du réacteur où le flux neutronique atteint sa valeur maximale, ou une valeur proche de celle-ci.

De préférence, l'âme en verre au bore contenue à l'intérieur de la barre de réglage suivant l'invention, doit être dépourvue de discontinuités dans toute la zone où le flux atteint une valeur supérieure à environ 90% de la valeur maximale. En dehors de cette zone, cette âme peut être fragmentée en plusieurs tronçons sans inconvénients majeurs. Cette âme qui, dans le cas de l'exemple, est réalisée sous la forme d'un tube en verre au bore en au moins trois tronçons bout à bout, peut aussi être réalisée suivant l'invention sous la forme d'une tige ou d'un profilé en plusieurs tronçons, ne présentant pas de discontinuités dans toute la zone du coeur du réacteur où le flux neutronique atteint sa valeur maximale ou une valeur proche de celle-ci.

On peut utiliser, à la place d'un verre au bore, des verres contenant d'autres éléments absorbant les neutrons thermiques tels que les terres rares. On peut aussi substituer aux verres d'autres composés à forte section de capture sous forme de tubes, tiges ou profilés obtenus par exemple par frittage.

## REVENDICATIONS

1°/ - Barre de réglage pour réacteur nucléaire caractérisée en ce qu'elle contient une âme en verre au bore ou en autres matières absorbant les neutrons thermiques sous forme d'un tube, d'une tige ou d'un profilé, réalisée en plusieurs tronçons bout à bout, qui ne présente pas de discontinuités dans toute la zone du coeur du réacteur où le flux neutronique atteint sa valeur maximale ou une valeur proche de celle-ci.

2°/ - Barre de réglage suivant revendication 1, caractérisée en ce que son âme est un tube en verre au bore.

3°/ - Barre de réglage suivant revendication 1 ou 2, caractérisée en ce qu'elle comporte au moins trois tronçons.

I-2

0029399

1

5

2

3

A↓     A↓

4

FIG.1

1
3
5

FIG.2

FIG.3

FIG.4